# EUROPÄISCHE PATENTSCHRIFT

(11) **EP 4 424 552 B1**
(45) Veröffentlichungstag und Bekanntmachung des Hinweises auf die Patenterteilung: **12.11.2025**
(21) Anmeldenummer: 24190273.3
(22) Anmeldetag: 02.03.2022
(51) Int. Cl.: B60L 58/40, B60L 50/75, B60L 50/71, B60L 50/72, B60L 58/30, B60L 58/32, B60L 1/00

(54) **PISTENRAUPE UND VERFAHREN ZUM STEUERN DER STROMVERSORGUNG EINER PISTENRAUPE**
PISTE GROOMER AND METHOD FOR CONTROLLING THE POWER SUPPLY OF A PISTE GROOMER
DAMEUSE ET PROCÉDÉ DE COMMANDE DE L'ALIMENTATION ÉLECTRIQUE D'UNE DAMEUSE

(30) Priorität: 23.03.2021 DE 102021202819
(43) Veröffentlichungstag der Anmeldung: 04.09.2024
(62) Teilanmeldung aus: 22159599.4
(73) Patentinhaber: Kässbohrer Geländefahrzeug AG, 88471 Laupheim (DE)
(72) Erfinder: Betz, Peter, 88471 Baustetten (DE); Luigart, Christof, 89155 Erbach (DE); Kuhn, Michael, 88480 Achstetten (DE); Mayer, Stephan, 89597 Munderkingen (DE)
(74) Vertreter: Patentanwälte Ruff, Wilhelm, Beier, Dauster & Partner mbB

(56) Entgegenhaltungen:
- EP-A1- 3 608 151
- EP-A2- 1 182 722
- EP-B1- 2 684 198
- EP-B1- 2 726 316
- DE-A1- 102018 202 106
- DE-U1- 202013 004 087
- KR-A- 20110 003 940
- US-B2- 10 793 157

## Beschreibung

Die Erfindung betrifft eine Pistenraupe mit einem Fahrantriebssystem für ein Kettenlaufwerk, das für jede Laufwerksseite des Kettenlaufwerks jeweils einen elektrischen Fahrantrieb umfasst, und mit einer elektrischen Energiequelle zur Versorgung wenigstens der elektrischen Fahrantriebe.

Aus der deutschen Gebrauchsmusterschrift DE 20 2013 004 087 U1 ist eine Pistenraupe mit einem elektrischen Fahrantrieb für jede Laufwerksseite des Kettenlaufwerks bekannt. Hierzu ist jeder Laufwerksseite jeweils ein Elektromotor zugeordnet. Eine heckseitige Pistenbearbeitungseinheit ist vorgesehen, deren Fräswelle ebenfalls mittels eines Elektromotors angetrieben ist. Als Stromquelle für diese elektrischen Antriebe ist eine Batterie oder ein Brennstoffzellensystem vorgesehen. Ein Hydrauliksystem kann ebenfalls mittels eines Elektromotors und einer Zahnradpumpe betrieben werden. Eine Hilfsbatterie mit einer Spannung von 24 V dient dazu, zusätzliche elektrische Verbraucher wie eine Fahrzeugbeleuchtung und Ähnliches mit Strom zu versorgen.

Aus dem US-Patent US 5,363,937 ist eine Pistenraupe bekannt, bei der jeder Laufwerksseite des Kettenlaufwerks ein elektrischer Fahrantrieb zugeordnet ist. Als elektrische Energiequelle ist ein Akkumulator vorgesehen.

Aus der europäischen Offenlegungsschrift EP 3 608 150 A1 ist eine Pistenraupe mit einem elektrischen Fahrantriebssystem bekannt. Ein Elektromotor treibt anstelle eines Dieselmotors eine hydraulische Verteilerpumpe an, mit der dann ein hydrostatisches Antriebssystem für das Kettenlaufwerk verbunden ist. Als fahrzeugfest montierte elektrische Energiequelle kann eine Brennstoffzelle, ein Batteriesystem oder Ähnliches vorgesehen sein.

Aus der koreanischen Offenlegungsschrift KR 2011 0003940 A ist ein Raupenbagger bekannt, der zwei Elektromotoren aufweist, um jeweils eine Antriebskette anzutreiben. Eine Brennstoffzelle stellt elektrische Energie zur Verfügung. Ein Superkondensator dient als Puffer. Eine Stromverteilereinheit verteilt die elektrische Energie von der Brennstoffzelle auf die Antriebsmotoren und gegebenenfalls den Superkondensator. Es kann ein elektrischer Motor zum Antreiben einer Hydraulikpumpe vorgesehen sein, wobei mit der Hydraulikpumpe dann der Baggerarm mit der Schaufel betrieben wird.

Aus der europäischen Offenlegungsschrift EP 3 608 151 A1 ist eine Pistenraupe mit einer heckseitig angeordneten Pistenbearbeitungseinheit bekannt, wobei die Pistenbearbeitungseinheit elektrisch angetrieben ist.

Aus der europäischen Patentschrift EP 2 726 316 B1 ist ein Brennstoffzellensystem und ein Verfahren zum Steuern des Brennstoffzellensystems vorgesehen. Das Brennstoffzellensystem weist einen Kompressor auf, um der Brennstoffzelle Luft zuzuführen.

Aus der deutschen Offenlegungsschrift DE 10 2018 202 106 A1 ist ein Energiemanagementsystem für ein Brennstoffzellenfahrzeug bekannt. Das Brennstoffzellenfahrzeug weist eine Wirbelstrombremse auf, um ein Bremsen des Brennstoffzellenfahrzeugs bei vollständig geladener Fahrzeugbatterie zu ermöglichen.

Aus der europäischen Patentschrift EP 2 684 198 B1 ist eine Vorrichtung zur Speicherung von Wasserstoff bekannt. Die Vorrichtung weist einen Speichertank für verflüssigten Wasserstoff auf.

Aus der europäischen Offenlegungsschrift EP 1 182 722 A2 ist ein Brennstoffzellensystem bekannt. Es ist eine kardanische Aufhängung des Brennstoffzellensystems erwähnt.

Mit der Erfindung soll eine Pistenraupe mit einem elektrischen Fahrantriebssystem verbessert werden.

Erfindungsgemäß ist hierzu eine Pistenraupe mit einem elektrischen Fahrantriebssystem für ein Kettenlaufwerk, das für jede Laufwerksseite des Kettenlaufwerks jeweils einen elektrischen Fahrantrieb umfasst, und mit einer elektrischen Energiequelle zur Versorgung wenigstens der elektrischen Fahrantriebe vorgesehen, bei der die elektrische Energiequelle wenigstens einen Akkumulator, wenigstens eine Brennstoffzelle und eine Stromverteilereinheit aufweist, wobei die Stromverteilereinheit einerseits elektrisch mit der wenigstens einen Brennstoffzelle und dem Akkumulator und andererseits mit den elektrischen Fahrantrieben verbunden ist.

Durch Vorsehen wenigstens eines Akkumulators, wenigstens einer Brennstoffzelle und einer Stromverteilereinheit kann die für das elektrische Fahrantriebssystem benötigte elektrische Energie wahlweise von der Brennstoffzelle, von dem Akkumulator oder von der Brennstoffzelle und dem Akkumulator gemeinsam bereitgestellt werden. Beispielsweise bringt die Brennstoffzelle die elektrische Grundleistung und der Akkumulator ist für die Leistung im Dynamikbereich zuständig. Bei Rekuperation im Bremsbetrieb kann die von dem elektrischen Fahrantrieb dann generatorisch erzeugte elektrische Energie problemlos in den Akkumulator eingespeist werden. Dadurch ist, bis auf die Brennstoffzelle, ein bidirektionaler Energiefluss möglich. Durch Vorsehen wenigstens einer Brennstoffzelle kann die elektrische Reichweite erheblich erhöht werden und die erfindungsgemäße Pistenraupe kann wesentlich besser auf aktuelle Anforderungen im reinen Fahrbetrieb oder im Präparierungsbetrieb eingestellt werden. Hierzu dient auch der elektrische Fahrantrieb, der für jede Laufwerksseite des Kettenlaufwerks jeweils einen elektrischen Fahrantrieb umfasst. Die elektrische Energie kann dadurch mit geringeren Verlusten auf das Kettenlaufwerk übertragen werden als dies bei Zwischenschaltung eines hydrostatischen Antriebs, der wiederum durch einen Elektromotor angetrieben wird, möglich wäre.

In Weiterbildung der Erfindung ist eine heckseitig angeordnete Pistenbearbeitungseinheit vorgesehen, die mittels eines ersten elektrischen Antriebs angetrieben ist, der elektrisch mit der Stromverteilereinheit verbunden ist.

Beispielsweise ist die Pistenbearbeitungseinheit als Heckfräse ausgebildet und eine Antriebswelle der Heckfräse wird mittels des ersten elektrischen Antriebs angetrieben. Zusätzlich kann die Pistenbearbeitungseinheit noch mit Hydraulikzylindern zum Anheben, Absenken und Andrücken oder dergleichen versehen sein. Selbstverständlich können anstelle von Hydraulikkomponenten auch elektrische Stellmotoren verwendet werden. Die für den ersten elektrischen Antrieb benötigte elektrische Energie wird mittels der Stromverteilereinheit bereitgestellt, so dass auch hier die wenigstens eine Brennstoffzelle, der Akkumulator und/oder die Brennstoffzelle und der Akkumulator gemeinsam für die Bereitstellung der elektrischen Energie genutzt werden können.

In Weiterbildung der Erfindung ist ein Hydrauliksystem vorgesehen, das mittels eines zweiten elektrischen Antriebs angetrieben ist, der elektrisch mit der Stromverteilereinheit verbunden ist.

Das Vorsehen eines Hydrauliksystems ist sinnvoll, da Hydraulikkomponenten, beispielsweise zum Anheben und Absenken eines Räumschilds sowie zum Anheben und Absenken einer Pistenbearbeitungseinheit, seit vielen Jahren bewährt sind und auch bei den extremen Umgebungsbedingungen, unter denen Pistenraupen eingesetzt werden, zuverlässig funktionieren. Der zweite elektrische Antrieb, der wiederum eine Hydraulikpumpe antreibt, wird mittels der Stromverteilereinheit mit elektrischer Energie versorgt. Infolgedessen kann auch für den Betrieb des Hydrauliksystems die Brennstoffzelle alleine, der Akkumulator alleine oder die Brennstoffzelle und der Akkumulator gemeinsam genutzt werden.

In Weiterbildung der Erfindung ist ein elektrisches Niederspannungsnetz mit einer Spannung im Bereich von 12 V bis 48 V, insbesondere zum Betreiben von Leuchten, Instrumenten, Steuergeräten und dergleichen, vorgesehen, wobei das Niederspannungsnetz elektrisch mit der Stromverteilereinheit verbunden ist.

Leuchten, Instrumente, Steuergeräte und dergleichen sind problemlos für den Betrieb im Niederspannungsbereich erhältlich und seit Jahren bewährt, nicht zuletzt auch unter den extremen Umgebungsbedingungen, unter denen Pistenraupen betrieben werden. Das Vorsehen eines elektrischen Niederspannungsnetzes kann dadurch die Zuverlässigkeit der erfindungsgemäßen Pistenraupe wesentlich verbessern und auch die entstehenden Kosten senken. Beispielsweise kann über das Niederspannungsnetz auch eine Heizung für die Fahrerkabine betrieben werden, wobei im Rahmen der Erfindung eine Heizung für das Fahrerhaus auch mit höherer Spannung betrieben werden kann und unmittelbar von der Stromverteilereinheit mit elektrischer Energie versorgt werden kann. Gegebenenfalls sind mit dem elektrischen Niederspannungsnetz auch Solarzellen verbunden. Pistenraupen arbeiten in der Regel nachts und werden tagsüber in der Regel für mehrere Stunden abgestellt. Solarzellen können dann das Aufladen eines Akkumulators des Niederspannungsnetzes bewirken oder unterstützen.

In Weiterbildung der Erfindung weist das elektrische Niederspannungsnetz wenigstens einen Niederspannungsakkumulator auf.

In Weiterbildung der Erfindung ist die Stromverteilereinheit als Hochvoltstromverteilereinheit ausgebildet und arbeitet mit einer Spannung im Bereich zwischen 100 V und 1000 V, insbesondere 400 V.

Je höher die Spannung einer elektrischen Energieversorgung ist, desto geringer sind bei gleicher elektrischer Leistung die Ströme. Gerade beim Bereitstellen von hohen elektrischen Leistungen, wie sie für ein elektrisches Fahrantriebssystem für ein Kettenlaufwerk benötigt werden, ist eine Hochvoltstromversorgung vorteilhaft, da beispielsweise die benötigten Kabelquerschnitte verringert werden können.

In Weiterbildung der Erfindung ist die Stromverteilereinheit zum Zuführen von elektrischer Energie aus der wenigstens einen Brennstoffzelle, aus dem Akkumulator und/oder aus einem stationären Netz zu den Fahrantrieben ausgebildet.

Mittels der Stromverteilereinheit kann daher die benötigte elektrische Energie bzw. die benötigte elektrische Leistung aus der wenigstens einen Brennstoffzelle aus dem wenigstens einen Akkumulator und/oder aus einem stationären Netz entnommen werden. Mittels der Stromverteilereinheit kann dadurch schnell und effizient auf die gerade benötigte elektrische Leistung reagiert werden. Beispielsweise wird die Brennstoffzelle zur Versorgung einer Grundlast verwendet, wohingegen die dynamische Bereitstellung elektrischer Leistung über den Akkumulator erfolgt. Bei Spezialfällen kann die benötigte elektrische Energie auch über ein stationäres Netz zugeführt werden, beispielsweise beim Präparieren von räumlich begrenzten Snowparks, beim Präparieren steiler Pisten im Windenbetrieb oder beim Bearbeiten von Liftspuren, Loipen oder Spazierwegen durch einen Oberleitungsanschluss.

In Weiterbildung der Erfindung ist die Stromverteilereinheit zum Zuführen von elektrischer Energie aus der wenigstens einen Brennstoffzelle, aus dem Akkumulator und/oder aus einem stationären Netz zu dem ersten elektrischen Antrieb für die Pistenbearbeitungseinheit, zu dem zweiten elektrischen Antrieb für das Hydrauliksystem und/oder zu dem Niederspannungsnetz ausgebildet.

Wie ausgeführt, ist im Windenbetrieb oder beim Bearbeiten von räumlich begrenzten Snowparks ein Kabelanschluss realisierbar. Mittels der Stromverteilereinheit kann das Zuführen elektrischer Energie zu den einzelnen elektrischen Verbrauchern gesteuert werden, indem die Brennstoffzelle alleine, der Akkumulator alleine oder die Brennstoffzelle und der Akkumulator gemeinsam herangezogen werden. Im Rekuperationsbetrieb beim Rückspeisen von elektrischer Energie kann der Akkumulator geladen werden.

In Weiterbildung der Erfindung ist die Stromverteilereinheit zum Zuführen von elektrischer Energie aus der wenigstens einen Brennstoffzelle, aus den elektrischen Fahrantrieben und/oder aus einem stationären Netz zu dem Akkumulator ausgebildet.

Auf diese Weise kann mittels der Stromverteilereinheit der Akkumulator aufgeladen werden, auch im Rekuperationsbetrieb, wenn von den Fahrantrieben generatorisch elektrische Energie erzeugt wird.

In Weiterbildung der Erfindung ist die Stromverteilereinheit zum Zuführen von elektrischer Energie aus der wenigstens einen Brennstoffzelle und/oder aus dem Akkumulator zu einem stationären Netz ausgebildet.

Auf diese Weise kann die Pistenraupe als Notstromaggregat dienen.

In Weiterbildung der Erfindung führt die Stromverteilereinheit die für eine Grundlast der Fahrantriebe benötigte elektrische Energie aus der wenigstens einen Brennstoffzelle den Fahrantrieben zu und die Stromverteilereinheit führt die für eine Spitzenlast der Fahrantriebe benötigte elektrische Energie aus dem Akkumulator den Fahrantrieben zu.

In Weiterbildung der Erfindung ist eine mechanisch oder hydraulisch betätigbare Bremse für das Kettenlaufwerk vorgesehen.

Mittels einer mechanisch oder hydraulisch betätigbaren Bremse kann die Sicherheit wesentlich erhöht werden, da auch bei Ausfall des elektrischen Systems noch eine Bremse zur Verfügung steht.

In Weiterbildung der Erfindung ist eine Wirbelstrombremse für das Kettenlaufwerk vorgesehen.

Mittels einer Wirbelstrombremse kann sehr feinfühlig abgebremst werden.

In Weiterbildung der Erfindung ist die wenigstens eine Brennstoffzelle kardanisch an einem Fahrzeugrahmen der Pistenraupe aufgehängt.

Pistenraupen werden regelmäßig in extremem Gelände bewegt. Eine kardanische Aufhängung der Brennstoffzelle kann dann deren zuverlässige Funktion sicherstellen.

In Weiterbildung der Erfindung ist ein Vorverdichter zum Verdichten von Umgebungsluft vorgesehen, wobei die verdichtete Luft von dem Vorverdichter der Brennstoffzelle zugeführt werden kann.

Auf diese Weise kann die Brennstoffzelle auch in großer Höhe mit gutem Wirkungsgrad und hoher elektrischer Leistung betrieben werden.

In Weiterbildung der Erfindung ist jede Laufwerksseite des Kettenlaufwerks mit einem Turasrad versehen, wobei ein Elektromotor des elektrischen Fahrantriebs als Radnabenmotor ausgebildet und im Turasrad angeordnet ist.

Mittels eines solchen Radnabenantriebs kann eine zusätzliche Getriebestufe vermieden werden.

In Weiterbildung der Erfindung weist jeder elektrische Fahrantrieb auf jeder Laufwerksseite mehrere Elektromotoren auf.

Beispielsweise können eine Spannachse und eine Antriebsachse jeder Laufwerksseite angetrieben werden oder mehrere Motoren sind auf einer Welle vorgesehen.

Gemäß der Erfindung wird die wenigstens eine Brennstoffzelle mit Wasserstoff betrieben und es ist wenigstens ein Wasserstofftank vorgesehen, wobei der Wasserstofftank als Druckspeicher, Kryotank oder Speicher für chemisch gebundenen Wasserstoff ausgebildet ist.

In einem Druckspeicher wird Wasserstoff unter hohem Druck gespeichert. Ein Kryotank speichert stark abgekühlten Wasserstoff, insbesondere flüssigen Wasserstoff. Chemisch gebundener Wasserstoff kann in einem Feststoffspeicher gespeichert werden.

Gemäß der Erfindung sind mehrere zylinderartige Wasserstofftanks vorgesehen, wobei die mehreren Wasserstofftanks wenigstens teilweise nebeneinander angeordnet sind und den Akkumulator U-förmig umgeben.

Zylinderartige Wasserstofftanks werden auch als flaschenförmige Wasserstofftanks bezeichnet. Solche Wasserstofftanks weisen einen kreiszylindrischen Grundkörper mit halbkugelartigen Abschlussstücken auf. Eine U-förmige Anordnung mehrerer Wasserstofftanks, so dass sie einen quaderförmigen oder kastenförmigen Akkumulator teilweise umgeben, ist platzsparend. Beispielsweise kann dann auch eine Einheit aus Akkumulator und Wasserstofftanks für ein einfaches Auswechseln vorgesehen sein.

Es ist ein Verfahren zum Steuern der elektrischen Energieversorgung einer erfindungsgemäßen Pistenraupe vorgesehen, bei dem das Bereitstellen der von den elektrischen Fahrantrieben, dem ersten elektrischen Antrieb für die Pistenbearbeitungseinheit und/oder dem zweiten elektrischen Antrieb für das Hydrauliksystem benötigten elektrischen Leistung mittels der Stromverteilereinheit vorgesehen ist, wobei die Stromverteilereinheit die benötigte elektrische Leistung wenigstens in Abhängigkeit einer Höhe der benötigten elektrischen Leistung von den Brennstoffzellen alleine, vom Akkumulator alleine oder von den Brennstoffzellen und dem Akkumulator gemeinsam den Fahrantrieben, dem ersten elektrischen Antrieb und/oder dem zweiten elektrischen Antrieb bereitstellt.

Beispielsweise wird eine für eine Grundlast erforderliche elektrische Leistung mittels der Brennstoffzelle bereitgestellt, für die bei Spitzenlasten zusätzlich zur Grundlast benötigte elektrische Leistung und im Rekuperationsbetrieb wird der Akkumulator verwendet.

Das Ansteuern der Brennstoffzelle erfolgt mittels der Stromverteilereinheit in Abhängigkeit der von den Fahrantrieben, dem ersten elektrischen Antrieb und/oder dem zweiten elektrischen Antrieb benötigten elektrischen Leistung.

Je nach Höhe der benötigten elektrischen Leistung kann die Leistung der Brennstoffzelle hochgefahren oder heruntergefahren werden.

Das Ansteuern der Brennstoffzelle ist mittels der Stromverteilereinheit und das Zuführen von elektrischer Energie von der Brennstoffzelle zu dem Akkumulator mittels der Stromverteilereinheit in Abhängigkeit eines Ladezustands des Akkumulators vorgesehen.

Auf diese Weise kann mittels der Brennstoffzelle der Akkumulator geladen werden, beispielsweise dann, wenn zu erwarten ist, dass hohe Spitzenlasten von dem Akkumulator bereitgestellt werden müssen oder beim Unterschreiten eines als zweckmäßig angesehenen Ladezustands des Akkumulators.

Weitere Merkmale und Vorteile der Erfindung ergeben sich aus den Ansprüchen und der folgenden Beschreibung einer bevorzugten Ausführungsform der Erfindung im Zusammenhang mit den Zeichnungen. In den Zeichnungen zeigen:
- Fig. 1: eine schematische Übersicht des elektrischen Systems der erfindungsgemäßen Pistenraupe,
- Fig. 2: die erfindungsgemäße Pistenraupe in einer schematischen Seitenansicht und
- Fig. 3: die Wasserstofftanks und den Akkumulator der Pistenraupe der Fig. 2.

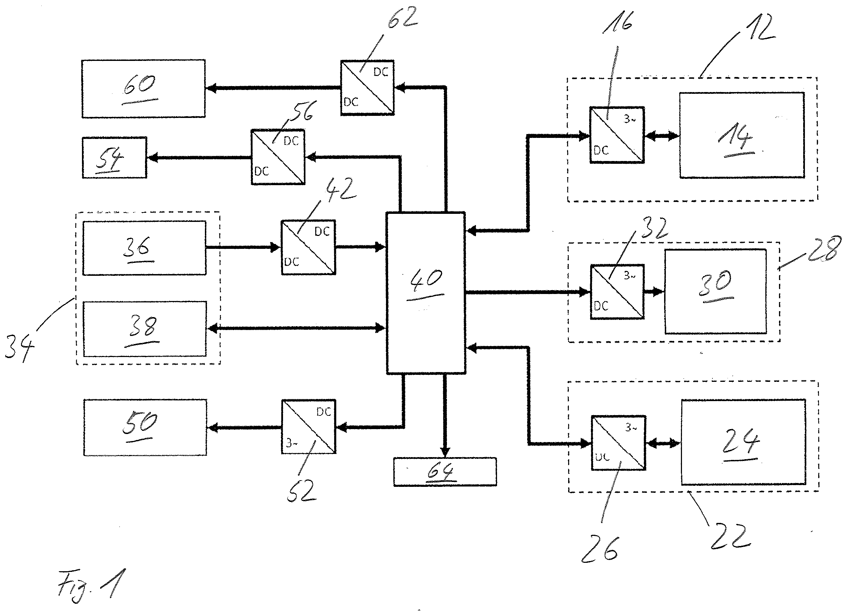

Die schematische Darstellung der Fig. 1 zeigt die Systemarchitektur des elektrischen Systems einer erfindungsgemäßen Pistenraupe.

Das elektrische Fahrantriebssystem weist eine Antriebseinheit 12 für die rechte Laufwerksseite auf. Die Antriebseinheit 12 weist eine permanenterregte Synchronmaschine 14 sowie einen Spannungs- und Frequenzumrichter 16 zum Ansteuern der permanenterregten Synchronmaschine auf. Mittels der permanenterregten Synchronmaschine 14 kann elektrische Energie in eine Bewegung einer nicht dargestellten Antriebskette umgesetzt werden und es kann beim Abbremsen der Kette generatorische Energie erzeugt werden, die dann wieder über den Spannungs- und Frequenzumrichter 16 dem Gesamtsystem zugeführt werden kann.

Es ist weiter eine Antriebseinheit 22 für den Fahrantrieb der linken Seite vorgesehen. Die Antriebseinheit 22 ist gleich aufgebaut wie die Antriebseinheit 12 und weist eine permanenterregte Synchronmaschine 24 und einen Spannungs- und Frequenzumrichter 26 auf.

Für eine Pistenbearbeitungseinheit, die in der Regel am Heck einer Pistenraupe angeordnet ist, ist eine Antriebseinheit 28 vorgesehen. Eine Fräswelle der Pistenbearbeitungseinheit wird mittels eines Elektromotors 30 angetrieben und die Antriebseinheit 28 weist auch eine Spannungs- und Frequenzumrichtereinheit 32 auf.

Weiterhin ist eine elektrische Energiequelle 34 vorgesehen, die mehrere Brennstoffzellen in einem Brennstoffzellen-Stack 36 und mehrere elektrische Akkumulatoren in einem Lithium-Ionen-Akkumulator 38 aufweist. Bei der dargestellten Ausführungsform arbeiten die Brennstoffzellen des Brennstoffzellen-Stacks 36 mit Wasserstoff, der aus in Fig. 1 nicht dargestellten Wasserstofftanks zugeführt wird. Im Rahmen der Erfindung können auch Brennstoffzellen verwendet werden, die mit anderen Grundstoffen betrieben werden. Bei der dargestellten Ausführungsform ist der Akkumulator 38 als Lithium-Ionen-Akkumulator ausgebildet. Im Rahmen der Erfindung können auch andere Akkumulatoren als Lithium-Ionen-Akkumulatoren eingesetzt werden.

Die elektrische Energiequelle 34 ist mit einer Hochvoltstromverteilereinheit 40 verbunden. Elektrische Energie aus der Energiequelle 34 kann der Hochvoltstromverteilereinheit 40 zugeführt werden und die Hochvoltstromverteilereinheit 40 kann elektrische Energie der elektrischen Energiequelle 34 zuführen.

Dem Brennstoffzellen-Stack 36 kann keine elektrische Energie zugeführt werden, lediglich dem Akkumulator 38. Ein den Energiefluss symbolisierender Pfeil zwischen dem Akkumulator 38 und der Hochvoltstromverteilereinheit 40 ist daher bidirektional ausgeführt.

Elektrische Energie von dem Brennstoffzellen-Stack 36 wird über einen Gleichspannungswandler 42 der Hochvoltstromverteilereinheit 40 zugeführt. Bei der dargestellten Ausführungsform arbeitet die Hochvoltstromverteilereinheit mit einer Spannung von 700 V und mittels des Gleichspannungswandlers 42 kann das Spannungsniveau des Brennstoffzellen-Stacks 36 an das Spannungsniveau der Hochvoltstromverteilereinheit 40 angepasst werden. Der Akkumulator 38 arbeitet mit einer Spannung von 700 V und besteht in bekannter Weise aus einer Zusammenschaltung mehrerer einzelner Akkumulatoren.

Die Hochvoltstromverteilereinheit 40 stellt das Verbindungsglied zwischen der elektrischen Energiequelle 34 und den elektrischen Antriebseinheiten 12, 22 dar. Mittels der Hochvoltstromverteilereinheit 40 kann den beiden Antriebseinheiten 12, 22 elektrische Energie von der Energiequelle 34 zugeführt werden und umgekehrt kann von den Antriebseinheiten 12 generatorisch erzeugte elektrische Energie wieder der Energiequelle 34, speziell dem Akkumulator 38, zugeführt werden. Die Hochvoltstromverteilereinheit 40 kann dabei die Brennstoffzelle 36, in Abhängigkeit der benötigten elektrischen Leistung ansteuern. Die Hochvoltstromverteilereinheit 40 stellt infolgedessen elektrische Energie von dem Brennstoffzellen-Stack 36 alleine, von dem Akkumulator 38 alleine oder von dem Brennstoffzellen-Stack 36 und dem Akkumulator 38 gemeinsam den Antriebseinheiten 12, 22 zur Verfügung. Beispielsweise wird die für eine Grundlast der Antriebseinheiten 12, 22, beispielsweise den Fahrantrieb in der Ebene, benötigte elektrische Energie ausschließlich von dem Brennstoffzellen-Stack 36 zugeführt. Spitzenlasten, die zusätzlich zur Grundlast von den Antriebseinheiten 12, 22 benötigt werden, werden aus dem Akkumulator 38 zugeführt.

Das in Fig. 1 dargestellte elektrische Gesamtsystem enthält weitere Teilsysteme, die elektrische Energie aufnehmen können. So ist ein zweiter elektrischer Antrieb 50 zum Antreiben einer Hydraulikpumpe für einen Hydraulikkreislauf vorgesehen, der über eine Spannungs- und Frequenzumrichtereinheit 52 von der Hochvoltstromverteilereinheit 40 mit elektrischer Energie versorgt wird.

Weiter ist ein elektrischer Antrieb 54 für einen Luftverdichter vorgesehen. Mittels des elektrischen Antriebs 54 wird Umgebungsluft verdichtet und dem Brennstoffzellen-Stack 36 zugeführt. Auf diese Weise können die Brennstoffzellen des Brennstoffzellen-Stacks 36 auch in sehr großer Höhe mit hoher elektrischer Leistung betrieben werden. Der elektrische Antrieb 54 wird über einen Spannungswandler 56 von der Hochvoltstromverteilereinheit 40 mit elektrischer Energie versorgt.

Weiter weist das elektrische System der erfindungsgemäßen Pistenraupe ein Niedervoltspannungsnetz 60 auf, das für die Versorgung der Beleuchtung, von Instrumenten, Ventilatoren und dergleichen der Pistenraupe vorgesehen ist. Das Niedervoltspannungsnetz arbeitet bei der dargestellten Ausführungsform mit einer Spannung von 24 V und weist zwei 12 V-Akkumulatoren auf. Das Niederspannungsnetz 60 wird über einen Spannungswandler 62 von der Hochvoltstromverteilereinheit 40 mit elektrischer Energie versorgt.

Darüber hinaus ist noch ein Bremschopper 64 vorgesehen. Der Bremschopper 64 dient zum Umwandeln überschüssiger elektrischer Energie in thermische Energie. Eventuell überschüssige elektrische Energie wird von der Hochvoltstromverteilereinheit 40 dem Bremschopper 64 zugeführt.

Beispielsweise kann bei steiler Bergabfahrt einer Pistenraupe der Fall auftreten, dass die von den Antriebseinheiten 12, 22 generatorisch erzeugte elektrische Energie nicht vollständig zum Wiederaufladen des Akkumulators 38 verwendet werden kann. Dies kann beispielsweise der Fall sein, wenn die generatorisch erzeugte elektrische Leistung einfach zu groß ist oder wenn der Akkumulator 38 bereits voll geladen ist. Die dann überschüssige elektrische Energie muss abgeführt werden. Dies geschieht durch eine Umsetzung der elektrischen Energie in thermische Energie im Bremschopper 64. Der Bremschopper 64 weist hierzu einen elektrischen Widerstand auf, der in den Stromkreis eingeschaltet wird, sich dann erhitzt und dadurch elektrische Energie in thermische Energie umsetzt. Dies geschieht dann, wenn eine Spannung im Zwischenkreis zwischen der Hochvoltstromverteilereinheit 40 und dem Bremschopper 64 eine für die Komponenten des elektrischen Gesamtsystems gefährliche Höhe erreicht. Sobald die Spannung im Zwischenkreis wieder abnimmt und kleiner als die Einschaltspannung wird, wird eine elektrische Verbindung zu dem elektrischen Widerstand über geeignete Schalter, beispielsweise Leistungstransistoren, wieder unterbrochen. Der Vorgang wiederholt sich, sobald die Spannung wieder ansteigt.

Mit dem in Fig. 1 dargestellten elektrischen System kann ein elektrischer Betrieb einer erfindungsgemäßen Pistenraupe in sehr effizienter Weise erfolgen. Der Brennstoffzellen-Stack 36 sorgt für eine erhebliche Verlängerung der Reichweite und auch für einen guten Wirkungsgrad bei der Erzeugung von elektrischer Energie. Durch Vorsehen der Hochvoltstromverteilereinheit 40 können der Brennstoffzellen-Stack 36 und der Akkumulator 38 wahlweise einzeln oder gemeinsam für das Bereitstellen von elektrischer Energie genutzt werden. Die für jede Laufwerksseite vorgesehenen Antriebseinheiten 12, 22 erlauben einen feinfühlig steuerbaren und mit nur geringen Verlusten behafteten elektrischen Antrieb des Kettenlaufwerks.

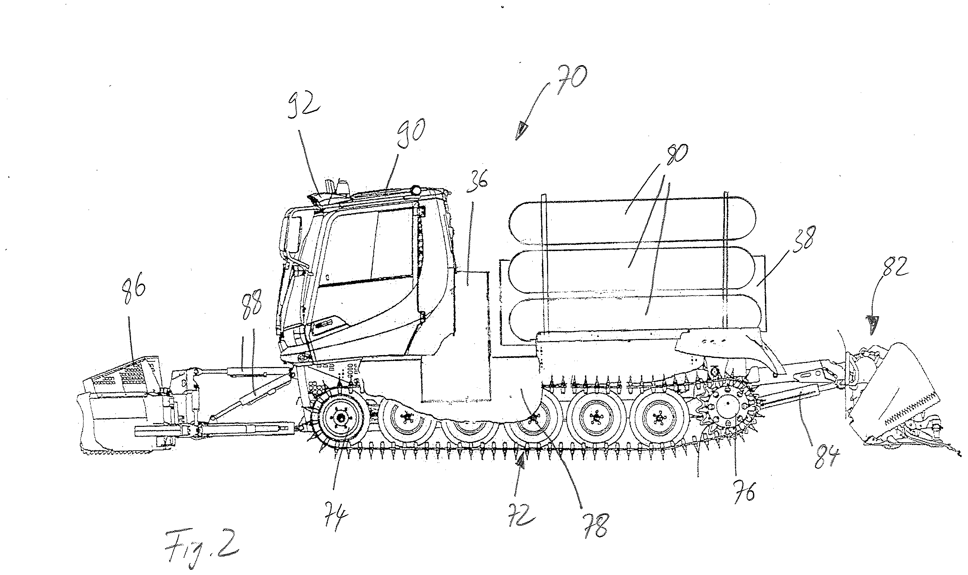

Fig. 2 zeigt eine Seitenansicht einer erfindungsgemäßen Pistenraupe 70. Die Pistenraupe 70 ist mit dem in Fig. 1 dargestellten elektrischen System versehen. Die Pistenraupe 70 weist ein Kettenlaufwerk 72 auf, das auf gegenüberliegenden Längsseiten angeordnete Laufwerksseiten aufweist. In der Darstellung der Fig. 2 ist lediglich die in Fahrtrichtung linke Kette des Kettenlaufwerks zu erkennen, wobei die in Fig. 2 erkennbare linke Kette durch die Antriebseinheit 22 aus Fig. 1 angetrieben wird.

Die Kette wird auf jeder Laufwerksseite mittels eines frontseitigen Spannrads 74 geführt und mittels eines rückseitigen Triebrads, das auch als Turasrad 76 bezeichnet wird, angetrieben. Bei der dargestellten Ausführungsform wird das Turasrad 76 mittels der permanenterregten Synchronmaschine 24, vgl. Fig. 1, angetrieben. Die Ausbildung der permanenterregten Synchronmaschine 24 als Radnabenmotor im Turasrad 76 ist im Rahmen der Erfindung möglich.

Die Pistenraupe 70 weist einen Fahrwerksrahmen 78 auf. Innerhalb dieses Fahrwerksrahmens 78, der in Fig. 2 teilweise ausgeschnitten dargestellt ist, ist der Brennstoffzellen-Stack 36 angeordnet. Die weiteren Komponenten des elektrischen Systems der Fig. 1 sind in Fig. 2 der Übersichtlichkeit halber nicht dargestellt. Der Brennstoffzellen-Stack 36 kann kardanisch aufgehängt sein, so dass die Brennstoffzellen auch im extremen Gelände sicher und mit hoher Leistung funktionieren. Die Brennstoffzellen des Brennstoffzellen-Stacks 36 werden bei der dargestellten Ausführungsform mit Wasserstoff betrieben, der aus Wasserstofftanks 80 zugeführt wird. In der Darstellung der Fig. 2 sind drei zylinderförmige Wasserstofftanks 80 zu erkennen, in denen Wasserstoff unter hohem Druck gespeichert ist.

Die Wasserstofftanks 80 sind U-förmig um den Akkumulator 38 herum angeordnet. Dadurch ergibt sich eine platzsparende Anordnung der Wasserstofftanks 80 und des Akkumulators 38.

Die Pistenraupe 70 weist weiter eine heckseitige Pistenbearbeitungseinheit 82 auf. Eine Fräswelle der Pistenbearbeitungseinheit 82 wird mittels des Elektromotors 30, siehe Fig. 1, angetrieben. Die Pistenbearbeitungseinheit 82 ist am Fahrwerksrahmen 78 schwenkbar angelenkt und kann mittels eines oder mehrerer Hydraulikzylinder 84 angehoben und abgesenkt sowie gegebenenfalls mittels weiterer, nicht dargestellter Hydraulikzylinder verschwenkt und/oder angedrückt werden. Der Hydraulikzylinder 84 wird über ein Hydrauliksystem versorgt, das mittels des Elektromotors 54, siehe Fig. 1, angetrieben ist, wobei der Elektromotor 54 beispielsweise eine Zahnradpumpe antreibt.

Die Pistenraupe 70 ist weiter mit einem Räumschild 86 an der Frontseite versehen. Das Räumschild 86 ist an dem Fahrwerksrahmen 78 frontseitig angelenkt und kann mittels mehrerer Hydraulikzylinder 88 angehoben, abgesenkt und verschwenkt werden. Die Hydraulikzylinder 88 werden über das Hydrauliksystem der Pistenraupe 70 versorgt, das mittels des Elektromotors 54, siehe Fig. 1, angetrieben wird.

Die Pistenraupe 70 weist ein Fahrerhaus 90 auf, auf dem unter anderem Scheinwerfer 92 montiert sind. Instrumente im Fahrerhaus sowie die Scheinwerfer 92 sind Teil des Niederspannungsnetzes 60 der Pistenraupe 70, siehe Fig. 1. Eine Heizung für das Fahrerhaus 90 kann entweder Teil des Niederspannungssystems 60 sein oder auch unmittelbar von der Hochvoltstromverteilereinheit 40, siehe Fig. 1, mit einer Spannung von 700 V beaufschlagt werden. Es ist auch möglich, eine beim Betrieb des Brennstoffzellen-Stacks 36 entstehende Abwärme für die Beheizung des Fahrerhauses 90 zu nutzen.

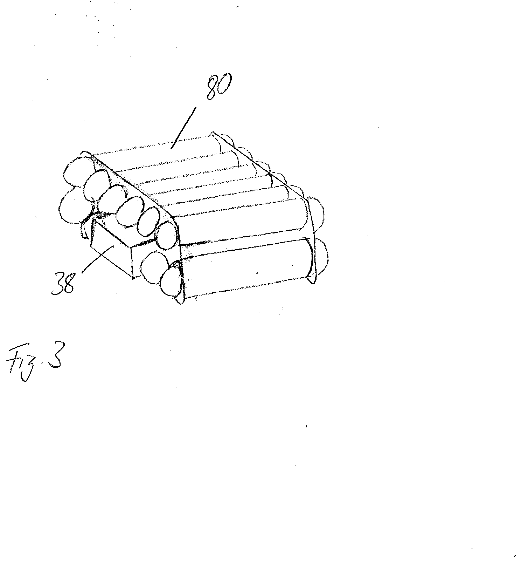

Fig. 3 zeigt die Wasserstofftanks 80 und den Akkumulator 38 in einer Ansicht von schräg oben. Es ist zu erkennen, dass insgesamt zehn Wasserstofftanks 80 vorgesehen sind, die den Akkumulator U-förmig umgeben. Dadurch kann eine platzsparende Anordnung des Akkumulators 38 und der Wasserstofftanks 80 bereitgestellt werden. Der Schwerpunkt der in Fig. 3 gezeigten Anordnung liegt vergleichsweise tief, da der Akkumulator 38 wesentlich schwerer ist als die Wasserstofftanks 80. Die Anordnung der Fig. 3 kann, wie in Fig. 2 dargestellt ist, so auf der Pistenraupe 70 angeordnet werden, dass die Wasserstofftanks 80 parallel zur Fahrtrichtung liegen. Es ist aber ohne weiteres möglich, die Anordnung der Fig. 3 auch so anzuordnen, dass die Wasserstofftanks 80 quer zur Fahrtrichtung angeordnet sind.

## Patentansprüche

1. Pistenraupe mit einem elektrischen Fahrantriebssystem für ein Kettenlaufwerk (72), das für jede Laufwerksseite des Kettenlaufwerks (72) jeweils einen elektrischen Fahrantrieb umfasst, und mit einer elektrischen Energiequelle zur Versorgung wenigstens der elektrischen Fahrantriebe, wobei die elektrische Energiequelle wenigstens einen Akkumulator (38), wenigstens eine Brennstoffzelle und eine Stromverteilereinheit aufweist, wobei die Stromverteilereinheit einerseits elektrisch mit der wenigstens einen Brennstoffzelle und dem Akkumulator und andererseits mit den elektrischen Fahrantrieben verbunden ist, wobei mehrere Brennstoffzellen in einem Brennstoffzellen-Stack (36) vorgesehen sind und wobei die Pistenraupe (70) einen Fahrwerksrahmen (78) aufweist, wobei innerhalb dieses Fahrwerkrahmens (78) der Brennstoffzellen-Stack (36) angeordnet ist, und wobei die wenigstens eine Brennstoffzelle mit Wasserstoff betrieben wird und wenigstens ein Wasserstofftank vorgesehen ist, wobei der Wasserstofftank als Druckspeicher, Kryotank oder Speicher für chemisch gebundenen Wasserstoff ausgebildet ist, und wobei mehrere zylinderartige Wasserstofftanks (80) vorgesehen sind, wobei die mehreren Wasserstofftanks wenigstens teilweise nebeneinander angeordnet sind und den Akkumulator (38) u-förmig umgeben.

2. Pistenraupe nach Anspruch 1, **dadurch gekennzeichnet, dass** eine heckseitig angeordnete Pistenbearbeitungseinheit (82) vorgesehen ist, die mittels eines ersten elektrischen Antriebs angetrieben ist, der elektrisch mit der Stromverteilereinheit verbunden ist.

3. Pistenraupe nach Anspruch 1 oder 2, **dadurch gekennzeichnet, dass** ein Hydrauliksystem vorgesehen ist, das mittels eines zweiten elektrischen Antriebs angetrieben ist, der elektrisch mit der Stromverteilereinheit verbunden ist.

4. Pistenraupe nach wenigstens einem der vorstehenden Ansprüche, **dadurch gekennzeichnet, dass** ein elektrisches Niederspannungsnetz mit einer Spannung im Bereich von 12 Volt bis 48 Volt, insbesondere zum Betreiben von Leuchten, Instrumenten, Steuergeräten und dergleichen, vorgesehen ist, wobei das Niederspannungsnetz elektrisch mit der Stromverteilereinheit verbunden ist.

5. Pistenraupe nach Anspruch 4, **dadurch gekennzeichnet, dass** das elektrische Niederspannungsnetz wenigstens einen Niederspannungsakkumulator aufweist.

6. Pistenraupe nach wenigstens einem der vorstehenden Ansprüche, **dadurch gekennzeichnet, dass** die Stromverteilereinheit als Hochvoltstromverteilereinheit ausgebildet ist und mit einer Spannung im Bereich zwischen 100 Volt und 1000 Volt, insbesondere 400 Volt, arbeitet, und/oder dass die Stromverteilereinheit zum Zuführen von elektrischer Energie aus der wenigstens einen Brennstoffzelle, aus dem Akkumulator (38) und/oder aus einem stationären Netz zu den Fahrantrieben ausgebildet ist, und/oder dass insbesondere die Stromverteilereinheit zum Zuführen von elektrischer Energie aus der wenigstens einen Brennstoffzelle, aus dem Akkumulator (38) und/oder aus einem stationären Netz zu dem ersten elektrischen Antrieb für die Pistenbearbeitungseinheit, zu dem zweiten elektrischen Antrieb für das Hydrauliksystem und/oder zu dem Niederspannungsnetz ausgebildet ist, und/oder dass vorzugsweise die Stromverteilereinheit zum Zuführen von elektrischer Energie aus der wenigstens einen Brennstoffzelle, aus den elektrischen Fahrantrieben und/oder aus einem stationären Netz zu dem Akkumulator ausgebildet ist, und/oder dass insbesondere die Stromverteilereinheit zum Zuführen von elektrischer Energie aus der wenigstens einen Brennstoffzelle und/oder aus dem Akkumulator zu einem stationären Netz ausgebildet ist.

7. Pistenraupe nach wenigstens einem der vorstehenden Ansprüche, **dadurch gekennzeichnet, dass** die Stromverteilereinheit die für eine Grundlast der Fahrantriebe benötigte elektrische Energie aus der wenigstens einen Brennstoffzelle den Fahrantrieben zuführt und die für eine Spitzenlast der Fahrantriebe benötigte elektrische Energie aus dem Akkumulator (38) den Fahrantrieben zuführt.

8. Pistenraupe nach wenigstens einem der vorstehenden Ansprüche, **gekennzeichnet durch** eine mechanisch und/oder hydraulisch betätigbare Bremse für das Kettenlaufwerk (72).

9. Pistenraupe nach wenigstens einem der vorstehenden Ansprüche, **gekennzeichnet durch** eine Wirbelstrombremse für das Kettenlaufwerk (72).

10. Pistenraupe nach wenigstens einem der vorstehenden Ansprüche, **dadurch gekennzeichnet, dass** die wenigstens eine Brennstoffzelle kardanisch an einem Fahrzeugrahmen (78) der Pistenraupe aufgehängt ist.

11. Pistenraupe nach wenigstens einem der vorstehenden Ansprüche, **dadurch gekennzeichnet, dass** ein Vorverdichter zum Verdichten von Umgebungsluft vorgesehen ist, wobei die verdichtete Luft von dem Vorverdichter der Brennstoffzelle zugeführt werden kann.

12. Pistenraupe nach wenigstens einem der vorstehenden Ansprüche, **dadurch gekennzeichnet, dass** jede Laufwerksseite des Kettenlaufwerks (72) mit einem Turasrad (76) versehen ist, wobei ein Elektromotor des elektrischen Fahrantriebs als Radnabenmotor ausgebildet und im Turasrad (76) angeordnet ist.

13. Pistenraupe nach wenigstens einem der vorstehenden Ansprüche, **dadurch gekennzeichnet dass** jeder elektrische Fahrantrieb auf jeder Laufwerksseite mehrere Elektromotoren aufweist.

## Claims

1. A snow groomer with an electric track drive system for a track (72) that comprises one electric track drive for each side of the track (72), and with an electric power source for supplying at least the electric track drives, the electric power source having at least one storage battery (38), at least one fuel cell and a power distributor unit, wherein the power distributor unit is electrically connected to the at least one fuel cell and to the storage battery on the one side and to the electric track drives on the other side; wherein several fuel cells are provided in a fuel cell stack (36) and the snow groomer (70) has a chassis frame (78), wherein the fuel cell stack (36) is arranged inside said chassis frame (78); wherein the at least one fuel cell is operated with hydrogen and at least one hydrogen tank is provided, wherein the hydrogen tank is designed as a pressure reservoir, cryo-tank or reservoir for chemically bound hydrogen and several cylinder-like hydrogen tanks (80) are provided; and wherein the several hydrogen tanks are arranged at least partially adjacent to one another and surround the storage battery (38) in a U-shaped manner.

2. The snow groomer according to claim 1, **characterized in that** a snow grooming unit (82) is provided arranged at the rear and is driven by means of a first electric drive which is electrically connected to the power distributor unit.

3. The snow groomer according to claim 1 or 2, **characterized in that** a hydraulic system is provided which is driven by means of a second electric drive electrically connected to the power distributor unit.

4. The snow groomer according to at least one of the above claims, **characterized in that** an electric low-voltage network with a voltage in the range from 12 V to 48 V is provided, in particular for the operation of lights, instruments, control devices and the like, wherein the low-voltage network is electrically connected to the power distributor unit.

5. The snow groomer according to claim 4, **characterized in that** the electric low-voltage network has at least one low-voltage storage battery.

6. The snow groomer according to at least one of the above claims, **characterized in that** the power distributor unit is designed as a high-voltage power distributor unit and operates with a voltage in the range between 100 V and 1000 V, in particular 400 V, and/or **in that** the power distributor unit is designed to supply electric power from the at least one fuel cell, from the storage battery (38) and/or from a stationary network to the track drives, and/or **in that** in particular the power distributor unit is designed to supply electric power from the at least one fuel cell, from the storage battery (38) and/or from a stationary network to the first electric drive for the snow grooming unit, to the second electric drive for the hydraulic system and/or to the low-voltage network, and/or **in that** the power distributor unit is preferably designed to supply electric power from the at least one fuel cell, from the electric track drives and/or from a stationary network to the storage battery, and/or **in that** the power distributor unit is designed in particular to supply electric power from the at least one fuel cell and/or from the storage battery to a stationary network.

7. The snow groomer according to at least one of the above claims, **characterized in that** the power distributor unit supplies the electric power needed for a base load of the track drives from the at least one fuel cell to the track drives, and the electric power needed for a peak load of the track drives from the storage battery (38) to the track drives.

8. The snow groomer according to at least one of the above claims, **characterized by** a mechanically and/or hydraulically actuatable brake for the track (72).

9. The snow groomer according to at least one of the above claims, **characterized by** an eddy current brake for the track (72).

10. The snow groomer according to at least one of the above claims, **characterized in that** the at least one fuel cell is cardanically mounted on a chassis frame (78) of the snow groomer.

11. The snow groomer according to at least one of the above claims, **characterized in that** a precompressor is provided for compressing ambient air, wherein the compressed air may be supplied from the precompressor to the fuel cell.

12. The snow groomer according to at least one of the above claims, **characterized in that** each side of the track (72) is provided with a sprocket wheel (76), wherein an electric motor of the electric track drive is designed as a hub motor and is arranged in the sprocket wheel (76).

13. The snow groomer according to at least one of the above claims, **characterized in that** each electric track drive has several electric motors on each track side.

## Revendications

1. Dameuse avec un système d'entraînement électrique pour un train de roulement à chenilles (72), qui comprend pour chaque côté du train de roulement à chenilles (72) respectivement un entraînement électrique, et avec une source d'énergie électrique pour l'alimentation d'au moins les entraînements électriques, sachant que la source d'énergie électrique présente au moins un accumulateur (38), au moins une pile à combustible et une unité de distribution de courant, que l'unité de distribution de courant est reliée électriquement d'une part à l'au moins une pile à combustible et à l'accumulateur et, d'autre part, aux entraînements électriques, que plusieurs piles à combustible sont prévues dans un empilement de piles à combustible (36) et que la dameuse (70) présente un châssis (78), sachant que l'empilement de piles à combustible (36) est disposé à l'intérieur de ce châssis (78), que l'au moins une pile à combustible fonctionne à l'hydrogène et qu'au moins un réservoir d'hydrogène est prévu, le réservoir d'hydrogène étant conçu comme un accumulateur de pression, un réservoir cryogénique ou un réservoir d'hydrogène lié chimiquement, et sachant que plusieurs réservoirs d'hydrogène (80) de type cylindrique sont prévus, les plusieurs réservoirs d'hydrogène étant disposés au moins partiellement les uns à côté des autres et formant un U autour de l'accumulateur (38).

2. Dameuse selon la revendication 1, **caractérisée en ce qu'**est prévue une unité de travail des pistes (82) disposée à l'arrière, qui est entraînée au moyen d'un premier entraînement électrique, lequel est relié électriquement à l'unité de distribution de courant.

3. Dameuse selon la revendication 1 ou 2, **caractérisée en ce qu'**est prévu un système hydraulique, qui est entraîné au moyen d'un deuxième entraînement électrique, lequel est relié électriquement à l'unité de distribution de courant.

4. Dameuse selon au moins l'une des revendications précédentes, **caractérisée en ce qu'**un réseau électrique basse tension est prévu avec une tension comprise entre 12 volts et 48 volts, en particulier pour alimenter des feux, des instruments, des appareils de commande et des dispositifs similaires, le réseau basse tension étant relié électriquement à l'unité de distribution de courant.

5. Dameuse selon la revendication 4, **caractérisée en ce que** le réseau électrique basse tension présente au moins un accumulateur basse tension.

6. Dameuse selon au moins l'une des revendications précédentes, **caractérisée en ce que** l'unité de distribution de courant est conçue comme une unité de distribution de courant haute tension et fonctionne avec une tension comprise entre 100 volts et 1000 volts, en particulier de 400 volts, et/ou **en ce que** l'unité de distribution de courant est conçue pour amener de l'énergie électrique de l'au moins une pile à combustible, de l'accumulateur (38) et/ou d'un réseau stationnaire aux entraînements, et/ou **en ce qu'**en particulier l'unité de distribution de courant est conçue pour amener de l'énergie électrique de l'au moins une pile à combustible, de l'accumulateur (38) et/ou d'un réseau stationnaire au premier entraînement électrique pour l'unité de travail des pistes, au deuxième entraînement électrique pour le système hydraulique et/ou au réseau basse tension, et/ou **en ce que** l'unité de distribution de courant est conçue de préférence pour amener de l'énergie électrique de l'au moins une pile à combustible, des entraînements électriques et/ou du réseau stationnaire à l'accumulateur, et/ou **en ce qu'**en particulier l'unité de distribution de courant est conçue pour amener de l'énergie électrique de l'au moins une pile à combustible et/ou de l'accumulateur à un réseau stationnaire.

7. Dameuse selon au moins l'une des revendications précédentes, **caractérisée en ce que** l'unité de distribution de courant amène l'énergie électrique nécessaire pour une charge de base des entraînements, de l'au moins une pile à combustible aux entraînements et amène l'énergie électrique nécessaire pour une charge de pointe des entraînements, de l'accumulateur (38) aux entraînements.

8. Dameuse selon au moins l'une des revendications précédentes, **caractérisée par** un frein à actionnement mécanique et/ou hydraulique pour le train de roulement à chenilles (72).

9. Dameuse selon au moins l'une des revendications précédentes, **caractérisée par** un frein à courants de Foucault pour le train de roulement à chenilles (72).

10. Dameuse selon au moins l'une des revendications précédentes, **caractérisée en ce que** l'au moins une pile à combustible est suspendue à la Cardan sur un châssis (78) de la dameuse.

11. Dameuse selon au moins l'une des revendications précédentes, **caractérisée en ce qu'**un pré-compresseur est prévu pour comprimer l'air ambiant, sachant que l'air comprimé du pré-compresseur peut être fourni à la pile à combustible.

12. Dameuse selon au moins l'une des revendications précédentes, **caractérisée en ce que** chaque côté du train de roulement à chenilles (72) est pourvu d'un barbotin (76), sachant qu'un moteur électrique de l'entraînement électrique est conçu comme moteur de moyeu et disposé dans le barbotin (76).

13. Dameuse selon au moins l'une des revendications précédentes, **caractérisée en ce que** chaque entraînement électrique comporte plusieurs moteurs électriques de chaque côté du train de roulement.
